# EUROPÄISCHE PATENTANMELDUNG

(11) **EP 2 623 963 A1**
(43) Veröffentlichungstag der Anmeldung: **07.08.2013**
(21) Anmeldenummer: 12198333.2
(22) Anmeldetag: 20.12.2012
(51) Int. Cl.: G01N 21/91

(54) **Verfahren zur zerstörungsfreien Prüfung von Werkstückoberflächen**

(30) Priorität: 19.01.2012 DE 102012200767
(71) Anmelder: MTU Aero Engines AG, 80995 München (DE)
(72) Erfinder: Bamberg, Joachim, 85221 Dachau (DE); Satzger, Wilhelm, 80807 München (DE)

(57) **Zusammenfassung**

Die Erfindung betrifft ein Verfahren zur zerstörungsfreien Prüfung von Werkstückoberflächen (10) mittels einer fluoreszierenden Eindringprüfung, wobei das Verfahren folgende Schritte umfasst: a) Reinigen des zu überprüfenden Bereichs der Werkstückoberfläche (10); b) Aufbringen eines fluoreszierenden, flüssigen Eindringmittels (12) auf den zu überprüfenden Bereich der Werkstückoberfläche (10), wobei der Eindringmittel (12) in mögliche Ausnehmungen (14) der Werkstückoberfläche (10) eindringt; c) Entfernen des überschüssigen Eindringmittels (12) von der Werkstückoberfläche (10); d) Aufbringen eines Entwicklers (16) auf den zu prüfenden Bereich der Werkstückoberfläche (10); e) Bleichen des fluoreszierenden Eindringmittels (12) mittels Lichtstrahlung in der durch den Auftrag des Entwicklers (16) auf der Werkstückoberfläche (10) gebildeten Schicht (18); und f) Optische Auswertung des in den vorhandenen Ausnehmungen (14) der Werkstückoberfläche (10) verbliebenen fluoreszierenden Eindringmittels (12).

## Beschreibung

Die Erfindung betrifft ein Verfahren zur zerstörungsfreien Prüfung von Werkstückoberflächen mittels einer fluoreszierenden Eindringprüfung.

Verfahren zur zerstörungsfreien Prüfung von Werkstückoberflächen sind bekannt. Bei der so genannten Eindringprüfung wird ein Eindringmittel auf eine gereinigte und zu überprüfende Werkstückoberfläche aufgebracht. Die Kapillarwirkung von feinen Oberflächenrissen und Poren begünstigt das Eindringen des Eindringmittels in derartige Ausnehmungen an der Werkstückoberfläche. Bei der so genannten fluoreszierenden Eindringprüfung wird mit einem fluoreszierenden Eindringmittel gearbeitet. Nach einer vorgegebenen Einwirkzeit wird dann überschüssiges Eindringmittel in einem Zwischenreinigungsvorgang abgewaschen. Anschließend wird ein Entwickler auf die zu prüfende Werkstückoberfläche aufgetragen. Der Entwickler fördert die Rückbenetzung des Eindringmittels an der Ausnehmung der Werkstückoberfläche, wobei durch den Entwickler das Eindringmittel aus der Ausnehmung an die Oberfläche gesaugt wird. Damit werden mögliche Unregelmäßigkeiten in der Werkstückoberfläche, wie z. B. rissartige Materialtrennungen deutlich sichtbar.

Die fluoreszierende Eindringprüfung wird insbesondere im Flugzeug-, Schiffs- und Automobilbau sowie anderen metallverarbeitenden Industrien eingesetzt. Aber auch andere Stoffe, wie z. B. Keramik können auf entsprechende Oberflächenrisse und Poren untersucht werden.

Nachteilig an dem bekannten Verfahren, insbesondere bei der Verwendung im Flugzeugbau, ist jedoch, dass nach dem Auftrag des Entwicklers und der entsprechenden Darstellung der Ausnehmungen bzw. Oberflächenrisse zur Verifikation der Anzeige die entsprechenden Bereiche der vermuteten Ausnehmungen manuell oberflächengereinigt werden müssen, um überschüssiges Eindringmittel, welches durch den Auftrag des Entwicklers sich wieder an der Werkstückoberfläche um den Bereich der Ausnehmung herum verteilt hat, zu entfernen. Erst nach dieser mechanischen Reinigung wird das ausschließlich die Ausnehmung bzw. den Oberflächenriss auskleidende Eindringmittel sichtbar. Nur dadurch ist eine exakte Beurteilung und Bemaßung der Ausnehmung möglich. Dieser manuelle Reinigungsschritt ist jedoch zeitaufwändig und kostenintensiv. Zudem ist er nur schwer standardisierbar, wodurch auch eine standardisierte Klassifikation möglicher Ausnehmungen bzw. Fehlstellen in der Werkstückoberfläche schwierig ist.

Aufgabe der vorliegenden Erfindung ist es, ein Verfahren zur zerstörungsfreien Prüfung von Werkstückoberflächen zu schaffen, welches eine schnellere und kostengünstigere Überprüfung der Werkstückoberflächen ermöglicht.

Die Aufgabe wird erfindungsgemäß durch ein Verfahren mit den Merkmalen des Patentanspruchs 1 gelöst. Vorteilhafte Ausgestaltungen mit zweckmäßigen Weiterbildungen der Erfindung sind in den jeweiligen Unteransprüchen angegeben.

Ein erfindungsgemäßes Verfahren zur zerstörungsfreien Prüfung von Werkstückoberflächen mittels einer fluoreszierenden Eindringprüfung umfasst folgende Schritte:
a) Reinigen des zu überprüfenden Bereichs der Werkstückoberfläche;
b) Aufbringen eines fluoreszierenden, flüssigen Eindringmittels auf den zu überprüfenden Bereich der Werkstückoberfläche, wobei das Eindringmittel in mögliche Ausnehmungen der Werkstückoberfläche eindringt;
c) Entfernen des überschüssigen Eindringmittels von der Werkstückoberfläche;
d) Aufbringen eines Entwicklers auf den zu prüfenden Bereich der Werkstückoberfläche;
e) Bleichen des fluoreszierenden Eindringmittels mittels Lichtstrahlung in der durch den Auftrag des Entwicklers auf der Werkstückoberfläche gebildeten Schicht; und
f) Optische Auswertung des in den vorhandenen Ausnehmungen der Werkstückoberfläche verbliebenen fluoreszierenden Eindringmittels.

Durch das Bleichen des fluoreszierenden Eindringmittels in der Entwicklerschicht kann auf eine manuelle Reinigung der Werkstückoberfläche nach dem Aufbringen des Entwicklers verzichtet werden. Durch das zumindest teilweise Bleichen des durch den Entwickler wieder an die Werkstückoberfläche aus den entsprechenden Ausnehmungen gesaugten Eindringmittels werden die entsprechenden Ausnehmungen bzw. Fehlstellen, rissartigen Materialtrennungen, Poren und Risse in der Werkstückoberfläche deutlich abgegrenzt, markiert und dargestellt. Die optische Auswertung erfolgt anhand des sich noch in den genannten Ausnehmungen befindlichen fluoreszierenden Eindringmittels, so dass die Ausnehmungen klar gegenüber der umgebenden Werkstückoberfläche abgegrenzt sind. Zudem wird ein Teil des sich in den Ausnehmungen befindlichen Eindringmittels aufgrund des osmotischen Drucks wieder in die Entwicklerschicht über und/oder neben den entsprechenden Ausnehmungen gedrückt. Dadurch ergibt sich vorteilhafterweise eine Art Vergrößerungseffekt, der die Ausnehmungen deutlicher hervorhebt und erkennen lässt. Des Weiteren werden Anteile an dem Eindringmittel, die sich nicht in den Ausnehmungen angesammelt haben, sondern an Unebenheiten oder Fremdkörpern auf der Oberfläche des Werkstücks haften zuverlässig gebleicht, so dass die verbleibenden, nicht gebleichten Anteile an Eindringmittel eindeutig auf das Vorhandensein von Ausnehmungen schließen lassen. Eine manuelle Oberflächenreinigung erübrigt sich. Vorteilhafterweise kann das erfindungsgemäße Verfahren standardisiert werden, so dass eine ebenfalls standardisierte Klassifikation möglicher Fehlstellen bzw. Ausnehmungen an Werkstückoberflächen möglich ist. Des Weiteren kann das erfindungsgemäße Verfahren schnell, einfach und kostengünstig durchgeführt werden.

In einer vorteilhaften Ausgestaltung des erfindungsgemäßen Verfahrens wird vor dem Verfahrensschritt e), d.h. dem Bleichen des fluoreszierenden Eindringmittels in einem Verfahrensschritt d1) eine erste optische Auswertung der Werkstückoberfläche durchgeführt. Durch diesen Zwischenschritt kann eine erste optische Kontrolle möglicher Ausnehmungen bzw. Fehlstellen in der Werkstückoberfläche durchgeführt werden, so dass sich das anschließende Bleichen des fluoreszierenden Eindringmittels auf diejenigen Bereiche der Werkstückoberfläche konzentriert, in denen möglichen Ausnehmungen bzw. Fehlstellen festgestellt werden. Dies kann zu einer weiteren Beschleunigung des Verfahrensablaufs beitragen.

In weiteren vorteilhaften Ausgestaltungen des erfindungsgemäßen Verfahrens kann die optische Auswertung gemäß den Verfahrensschritten f) und/oder d1) mittels Bestrahlung der zu überprüfenden Werkstückoberfläche mit UV-Licht erfolgen. Dadurch können mit dem fluoreszierenden Eindringmittel ausgefüllte bzw. benetzte Ausnehmungen an der Werkstückoberfläche deutlich erkannt werden. Des Weiteren ist es möglich, für den Bleichvorgang gemäß Verfahrensschritt e) eine intensive UV-Strahlung zu verwenden. Die Strahlungsintensität der für das Bleichen gemäß Verfahrensschritt e) verwendeten UV-Strahlung ist dabei üblicherweise größer als die Strahlungsintensität der im Verfahrensschritt f) und/oder d1) verwendeten UV-Strahlung. Des Weiteren besteht die Möglichkeit, dass die Wellenlänge der im Verfahrensschritt e) verwendeten UV-Strahlung derjenigen im Verfahrensschritt f) und/oder d1) entspricht. Durch die verwendete UV-Strahlung ist einerseits eine deutliche und exakte Sichtbarmachung von Ausnehmungen in der Werkstückoberfläche möglich. Des Weiteren erfolgt ein zuverlässiges Bleichen des fluoreszierenden Eindringmittels in der durch den Auftrag des Entwicklers auf der Werkstückoberfläche gebildeten Schicht, wobei insbesondere Anteile an dem Eindringmittel, die sich nicht in den Ausnehmungen angesammelt haben, sondern an Unebenheiten oder Fremdkörpern auf der Oberfläche des Werkstücks haften, zuverlässig gebleicht werden. Werden für die optische Auswertung und den Bleichvorgang UV-Strahlungen gleicher bzw. vergleichbarer Wellenlänge verwendet, so kann eine einzige UV-Lichtquelle verwendet werden.

In einer weiteren vorteilhaften Ausgestaltung des erfindungsgemäßen Verfahrens können nach Beendigung des Verfahrensschritts f) die Verfahrensschritte b) bis f) wiederholt werden. Die Wiederholung dieser Verfahrensschritte kann vorteilhafterweise zu einer noch exakteren Darstellung unerwünschter Ausnehmungen an der Werkstückoberfläche führen.

In einer weiteren vorteilhaften Ausgestaltung des erfindungsgemäßen Verfahrens ist die Werkstückoberfläche eine Oberfläche einer Strömungsmaschine, insbesondere eines Bauteils einer Gasturbine. Bauteile von Strömungsmaschinen, wie z. B. eines Flugzeugtriebwerks, sind besonders kritisch bezüglich Unregelmäßigkeiten an den Bauteiloberflächen, wie z. B. feinen Rissen.

In einer weiteren vorteilhaften Ausgestaltung des erfindungsgemäßen Verfahrens ist das Eindringmittel ein fluoreszierendes Farbeindringmittel. Durch die Verwendung eines fluoreszierenden Farbeindringmittels ist neben der Fluoreszenzanzeige auch eine farbliche Ausgestaltung möglicher Ausnehmungen in der Werkstückoberfläche möglich. Dadurch kann die optische Auswertung der entsprechenden Ausnehmungen an der Werkstückoberfläche sehr einfach und exakt durchgeführt werden.

Verwendung findet das im Vorhergehenden beschriebene erfindungsgemäße Verfahren insbesondere bei der Herstellung, bei der Schlussprüfung und bei der Instandsetzung von Bauteilen einer Strömungsmaschine, insbesondere von Bauteilen einer Gasturbine.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Dabei zeigen:

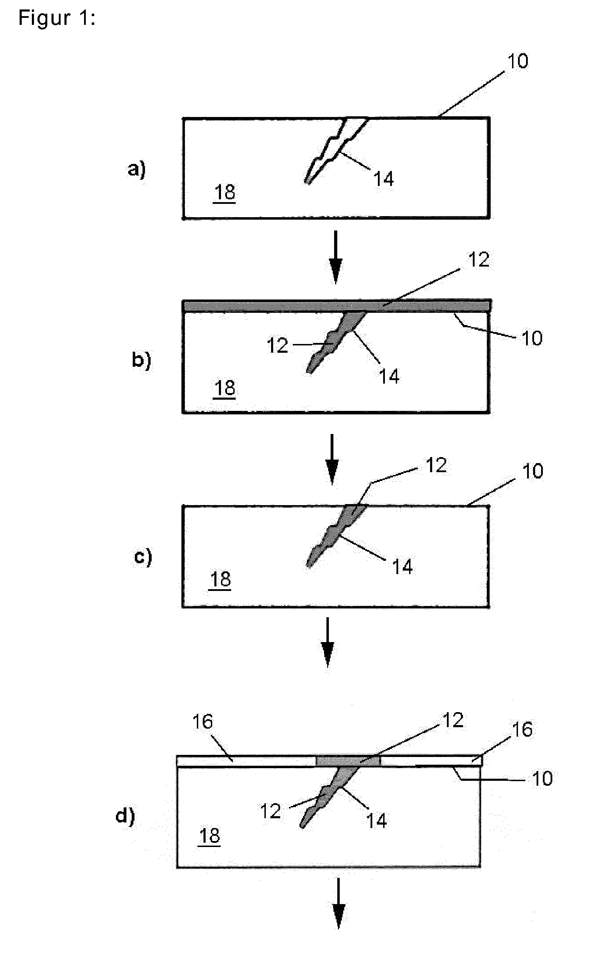

Fig. 1a bis 1g ein Ablaufschema eines erfindungsgemäßen Verfahrens zur zerstörungsfreien Prüfung von Werkstückoberflächen mittels einer fluoreszierenden Eindringprüfung.

Die Figuren 1a bis 1g zeigen ein Ablaufschema eines Verfahrens zur zerstörungsfreien Prüfung einer Werkstückoberfläche 10 eines Werkstücks 18. Figur 1a zeigt ein Werkstück 18 mit einer Werkstückoberfläche 10 und einer rissförmigen Ausnehmung 14 in der Werkstückoberfläche 10. Die Werkstückoberfläche 10 wurde von Verunreinigungen gereinigt. Figur 1b zeigt das Werkstück 18 mit einem auf die Werkstückoberfläche 10 aufgetragenen Eindringmittel 12. Man erkennt, dass das Eindringmittel 12 neben dem schichtartigen Auftrag auf der Werkstückoberfläche 10 auch in die rissartige Ausnehmung 14 eindringt. In dem dargestellten Ausführungsbeispiel wird ein flüssiges fluoreszierendes Eindringmittel 12 verwendet. Entsprechende fluoreszierende Eindringmittel 12 sind in einer großen Vielzahl aus dem Stand der Technik bekannt. Dabei müssen je nach Art und Material des zu überprüfenden Werkstücks 18 Eindringmittel 12 verwendet werden, die aufgrund ihrer spezifisch eingestellten Eigenschaften jeweils das Bestreben haben, sich nicht nur auf der Werkstückoberfläche 10 auszubreiten, sondern gleichzeitig auch in die entsprechenden Ausnehmungen 14 der Werkstückoberfläche 10 eindringen. Dabei können Eindringmittel 12 basierend auf Kohlenwasserstoffen und organischen Farbstoffen verwendet werden.

In einem nachfolgenden Verfahrensschritt wird überschüssiges Eindringmittel 12 von der Werkstoffoberfläche 10 entfernt. Man erkennt in Figur 1c die gereinigte Werkstückoberfläche 10. Das Eindringmittel 12 ist nur noch in der Ausnehmung 14 vorhanden. In einem weiteren Verfahrensschritt wird ein Entwickler 16 auf den zu prüfenden Bereich der Werkstückoberfläche 10 aufgebracht. Durch den Auftrag des Entwicklers 16 wird das Eindringmittel 12 aus der Ausnehmung 14 wieder an die Werkstückoberfläche 10 gezogen. Aus Figur 1d wird deutlich, dass nunmehr das Eindringmittel 12 nicht nur in der Ausnehmung 14, sondern auch in den die Ausnehmung 14 umgebenden Bereichen an der Werkstückoberfläche 10 innerhalb der Entwicklerschicht 16 vorhanden ist.

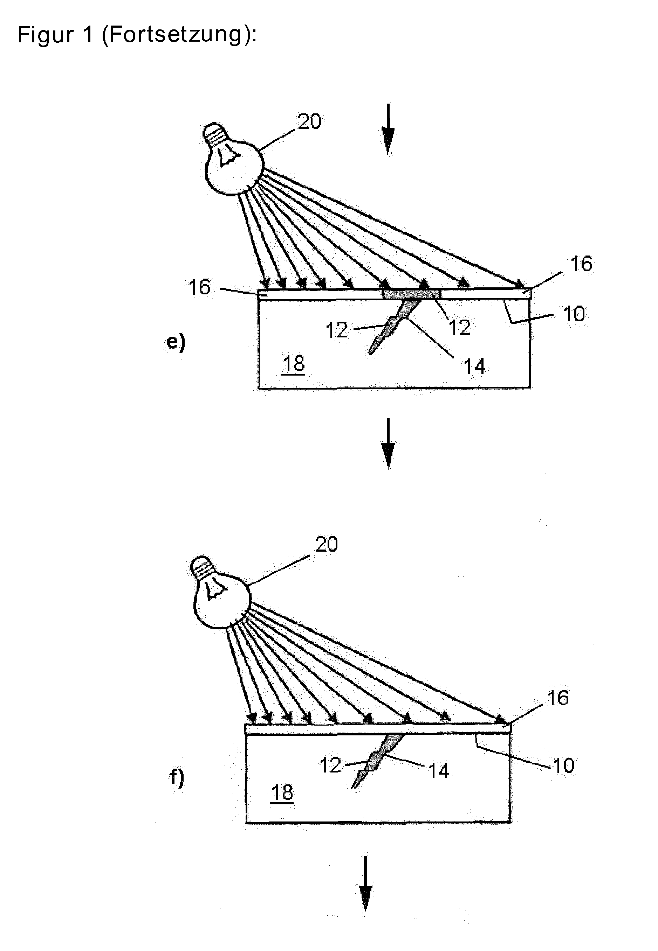

In einem weiteren Verfahrensschritt wird nunmehr mittels Lichtstrahlung aus einer Lichtquelle 20 das fluoreszierende Eindringmittel 12 innerhalb der durch den Auftrag des Entwicklers 16 auf der Werkstückoberfläche 10 gebildeten Schicht gebleicht. In dem dargestellten Ausführungsbeispiel wird UV-Licht mit hoher Strahlungsintensität verwendet. Das Bleichen erfolgt bis zur zumindest teilweisen und auch vollständigen Ausbleichen der fluoreszierenden Bestandteile innerhalb des Eindringmittels 12 in der Schicht des Entwicklers 16. Figur 1e zeigt den Beginn des genannten Bleichvorgangs, Figur 1f zeigt das Ende des Bleichvorgangs mit einem vollständigen Ausbleichen der fluoreszierenden Bestandteile des Eindringmittels 12 innerhalb der Entwicklerschicht 16. Die verwendeten Entwickler 16 sind ebenfalls aus dem Stand der Technik bekannt, üblicherweise werden anorganische Substanzen in Pulverform verwendet.

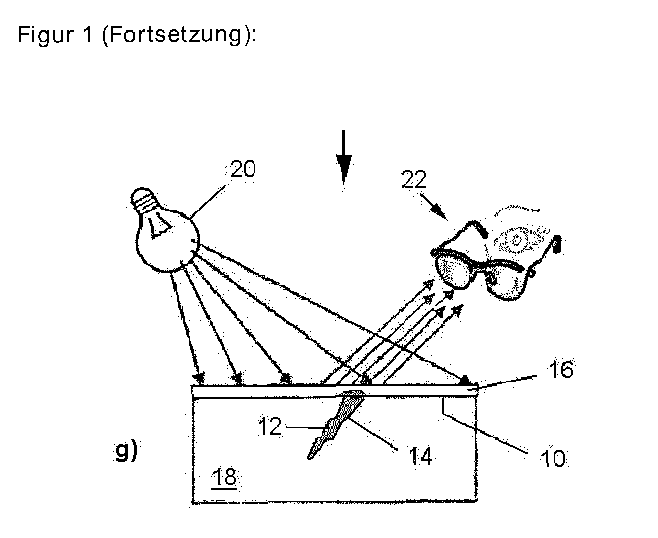

In Figur 1g ist ein abschließender Verfahrensschritt, nämlich die optische Auswertung des in den vorhandenen Ausnehmungen 14 der Werkstückoberfläche 10 verbliebenen fluoreszierenden Eindringmittels 12 dargestellt. Durch den vorherigen Bleichvorgang befindet sich das fluoreszierende Eindringmittel 12 nur noch innerhalb der rissartigen Ausnehmung 14 und nicht mehr an Unebenheiten oder Fremdkörpern auf der Werkstückoberfläche 10. Die Ränder der rissartigen Ausnehmung 14 sind markiert und können entsprechend beobachtet und ausgewertet werden. Zudem wird ein Teil des sich in den Ausnehmungen befindlichen Eindringmittels 12 aufgrund des osmotischen Drucks wieder in die Entwicklerschicht 16 über und/oder neben der Ausnehmung 14 gedrückt. Dadurch ergibt sich vorteilhafterweise eine Art Vergrößerungseffekt, der die Ausnehmung 14 deutlicher hervorhebt und erkennen lässt.

Durch den in den Figuren 1e und 1g dargestellten Bleichvorgang wird zudem möglicherweise vorhandene Hintergrundfluoreszenz beseitigt, so dass die die rissartigen Ausnehmungen 14 kennzeichnenden fluoreszierenden Markierungen bzw. Bereiche deutlich erkennbar sind.

## Patentansprüche

1. Verfahren zur zerstörungsfreien Prüfung von Werkstückoberflächen (10) mittels einer fluoreszierenden Eindringprüfung, wobei das Verfahren folgende Schritte umfasst:
a) Reinigen des zu überprüfenden Bereichs der Werkstückoberfläche (10);
b) Aufbringen eines fluoreszierenden, flüssigen Eindringmittels (12) auf den zu überprüfenden Bereich der Werkstückoberfläche (10), wobei das Eindringmittel (12) in mögliche Ausnehmungen (14) der Werkstückoberfläche (10) eindringt;
c) Entfernen des überschüssigen Eindringmittels (12) von der Werkstückoberfläche (10);
d) Aufbringen eines Entwicklers (16) auf den zu prüfenden Bereich der Werkstückoberfläche (10);
e) Bleichen des fluoreszierenden Eindringmittels (12) mittels Lichtstrahlung in der durch den Auftrag des Entwicklers (16) auf der Werkstückoberfläche (10) gebildeten Schicht; und
f) Optische Auswertung des in den vorhandenen Ausnehmungen (14) der Werkstückoberfläche (10) verbliebenen fluoreszierenden Eindringmittels (12).

2. Verfahren nach Anspruch 1, **dadurch gekennzeichnet, dass** vor dem Verfahrensschritt e) in einem Verfahrensschritt d1) eine erste optische Auswertung der Werkstückoberfläche (10) erfolgt.

3. Verfahren nach Anspruch 1 oder 2, **dadurch gekennzeichnet, dass** die optische Auswertung gemäß dem Verfahrensschritt f) und/oder d1) mittels Bestrahlung der zu überprüfenden Werkstückoberfläche (10) mit UV-Licht erfolgt.

4. Verfahren nach einem der Ansprüche 1 bis 3, **dadurch gekennzeichnet, dass** für den Bleichvorgang gemäß Verfahrensschritt e) eine intensive UV-Strahlung verwendet wird.

5. Verfahren nach Anspruch 3 oder 4, **dadurch gekennzeichnet, dass** die Strahlungsintensität der für das Bleichen gemäß Verfahrensschritt e) verwendeten UV-Strahlung größer ist als die der im Verfahrensschritt f) und/oder d1) verwendeten UV-Strahlung.

6. Verfahren nach Anspruch 4 oder 5, **dadurch gekennzeichnet, dass** die Wellenlänge der im Verfahrenschritt e) verwendeten UV-Strahlung derjenigen im Verfahrensschritt f) und/oder d1) entspricht.

7. Verfahren nach einem der Ansprüche 1 bis 6, **dadurch gekennzeichnet, dass** nach Beendigung des Verfahrensschrittes f) die Verfahrensschritte b) bis f) wiederholt werden.

8. Verfahren nach einem der Ansprüche 1 bis 7, **dadurch gekennzeichnet, dass** die Werkstückoberfläche (10) eine Oberfläche einer Strömungsmaschine, insbesondere eines Bauteils einer Gasturbine ist.

9. Verfahren nach einem der Ansprüche 1 bis 8, **dadurch gekennzeichnet, dass** das Eindringmittel (12) ein fluoreszierendes Farbeindringmittel ist.

10. Verwendung eines Verfahrens nach einem der Ansprüche 1 bis 9 bei der Herstellung, bei der Schlussprüfung und bei der Instandsetzung von Bauteilen einer Strömungsmaschine, insbesondere von Bauteilen einer Gasturbine.
